# FASCICULE DE BREVET EUROPEEN

(11) **EP 0 593 654 B1**
(45) Date de publication et mention de la délivrance du brevet: **27.12.1996**
(21) Numéro de dépôt: 92915668.5
(22) Date de dépôt: 03.07.1992
(51) Int. Cl.: A01N 25/12, A01N 25/18, A01N 33/22, A01N 63/02

(54) **PRODUIT REPULSIF A L'EGARD DES ANIMAUX, SON PROCEDE DE FABRICATION ET SON UTILISATION**
MITTEL ZUR ABWEHR VON TIEREN, VERFAHREN ZU IHRER HERSTELLUNG UND IHRE VERWENDUNG
ANIMAL-REPELLENT PRODUCT, METHOD FOR PRODUCING SAME, AND USES THEREOF

(30) Priorité: 05.07.1991 FR 9108443
(43) Date de publication de la demande: 27.04.1994
(73) Titulaire: Laboratoire Algochimie, 37110 Chateau-Renault (FR)
(72) Inventeur: BARBIEUX, Serge, F-77300 Fontainebleau (FR); ROSE, Denis, F-77150 Ferolles-Attilly (FR)
(74) Mandataire: Schulz, Jean-Alain
(86) Numéro de dépôt international: FR9200634
(87) Numéro de publication internationale: WO9300810

(56) Documents cités:
- WO-A-83/00417
- DE-A- 2 842 199
- DE-A- 3 631 349
- FR-A- 1 583 399
- FR-A- 2 458 218
- US-A- 3 627 878
- O. A. NEUMULLER "Römpps Chemie-Lexikon" 1988 , FRANCKH' SCHE VERLAGSHANDLUNG , STUTTGART, DE

## Description

La présente invention concerne un produit répulsif à l'égard des animaux.

L'invention vise également le procédé de fabrication de ce produit répulsif et son utilisation.

On ne connaît actuellement pas de produit capable d'avoir une action répulsive efficace vis-à-vis des animaux, tels que le gibier, pour empêcher ceux-ci de pénétrer dans des zones cultivées ou d'élevage.

Les produits connus, en effet, sont soit insuffisamment efficaces, soit ne sont efficaces que pendant une durée très réduite du fait que lorsqu'ils sont en contact avec l'air libre, ils s'évaporent très rapidement ou sont rapidement dilués ou absorbés par le sol notamment par l'eau de pluie.

Le but de la présente invention est par conséquent de proposer un produit répulsif ayant une efficacité nettement améliorée par rapport à celle des produits existants.

Suivant l'invention, ce produit répulsif est caractérisé en ce qu'il est constitué par des granules en matière absorbante inerte imprégnée en tant qu'agent répulsif olfactif, d'huile d'os.

Il est bien connu de mettre sous forme de granules des produits destinés à la lutte contre les rongeurs et autres petits animaux. De tels granules sont destinés à appâter en vue de détruire et non pas d'agir en tant que répulsif.

Compte tenu de cet état de la technique, l'homme du métier était dissuadé de présenter un produit répulsif sous forme de granule. Il pouvait craindre que l'action répulsive soit fortement atténuée par le support absorbant.

Or, les essais effectués par le déposant, ont établi d'une manière surprenante que les granules imprégnés d'huile d'os avaient non seulement une grande efficacité vis-à-vis des animaux, mais que cette efficacité était maintenue pendant une grande durée.

Ce résultat peut s'expliquer a posteriori, du fait que la matière absorbante empêche la dilution rapide de l'agent répulsif par les eaux de pluie ainsi qu'une évaporation rapide dans l'atmosphère.

Un autre avantage des granules conformes à l'invention réside dans le fait qu'ils sont particulièrement commodes à utiliser. Il suffit en effet de les répandre, à la main, à la périphérie ou en plein sur le sol de la zone à protéger.

L'huile d'os est un sous-produit obtenu par la distillation à sec d'os broyés, ayant préalablement séchés au soleil. On obtient d'abord un mélange d'huile d'os et d'une phase aqueuse (liqueur amoniacale d'os). La phase aqueuse est ensuite éliminée par décantation. Aucun solvant ou autre produit chimique n'entre dans la préparation de l'huile d'os.

L'huile d'os est un liquide visqueux de couleur brune foncée, présentant une odeur feotide prononcée. Sa densité, à 15°C est égale à 0,97.

L'huile d'os est composée principalement de nitriles d'acides gras saturés ou insaturés (acides oléïque, stéarique, palmitoléïque).

La fabrication et l'analyse chimique de l'huile d'os a été décrite dans "Kennzahlen und Glyceridzusammensetzung des Klauenöles und des Fussknochenfettes von Büffel, Rindern und Schafen" par Z.E. SHOEB, H.M. EL KHALAFY et F.S. TAHA réalisée au Fats and Oil Laboratory, Le Caire, Egypte et publiée dans "SEIFEN - ÖLE - FETTE - WACHSE" 98 N° 12/1972.

Selon cet article, l'huile d'os est fabriquée de la façon suivante :

Les os sont lavés à l'eau et coupés en petits morceaux. L'huile d'os est obtenue en autoclavant avec une faible quantité d'eau les fragments d'os pendant une heure trente à 132°C sous une pression de 2,8 bars. L'huile d'os est séparée de la phase aqueuse par décantation puis soumise à un lavage à l'eau chaude. Après décantation l'huile est placée à 60°C pendant une nuit.

Par ailleurs, l'action répulsive vis-à-vis des oiseaux a été décrite dans :

"The acute oral toxicity, repellency, and hazard potential of 998 chemicals to one or more species of wild and domestic birds" par E.W. SCHAFER, W.A. BOWLES et J. HURLBUT réalisée au U.S. fish and wildlife service, wildlife research center, Denver, COLORADO et publiée dans "ARCHIVES OF ENRIRONMENTAL CONTAMINATION AND TOXICOLOGY" 12, 355-382 (1983).

Dans cette publication, les auteurs ont déterminé pour l'huile d'os le pouvoir répulsif à l'égard du carrouge à épaulettes et du passereau. La valeur de répulsivité obtenue classe l'huile d'os comme faisant partie des substances ayant une répulsivité moyenne à forte sur ces deux espèces d'oiseaux.

La matière absorbante des granules renfermant l'huile d'os est, suivant la présente invention, de préférence une substance argileuse telle que la bentonite et la sépiolite.

Cette substance argileuse est facile à mettre sous forme de granules, évite une dilution rapide de l'huile d'os par l'eau de pluie, ainsi qu'une évaporation trop rapide de l'agent olfactif dans l'atmosphère.

On peut justifier la bonne tenue des granulés à l'égard de l'eau de pluie, par le fait que la substance argileuse est imprégnée d'une matière huileuse (l'huile d'os) qui agit en tant qu'anti-mouillant à l'égard de la substance argileuse.

Selon une version avantageuse de l'invention, les granules renferment 20 à 40% en poids d'huile d'os pour 60 à 80% de bentonite.

Les meilleurs résultats sont toutefois obtenus lorsque les granules contiennent 30% en poids d'huile d'os et 70% en poids de bentonite.

Pour préparer les granules selon l'invention, on procède de préférence de la façon suivante :

### A/ Mélange :

La première étape consiste à remplir un malaxeur avec la bentonite sur laquelle on ajoute l'huile d'os. On procède à un premier malaxage qui dure une heure. On laisse ensuite le mélange reposer pendant douze heures. On renouvelle successivement trois fois cette opération. La dernière phase de repos étant suivie par une heure de malaxage. Le malaxage est réalisé à température ambiante. Le mélange ne dépasse pas la température de 40°C pendant le malaxage.

### B/ Granulation :

Immédiatement à l'issue de la phase de malaxage, le mélange est convoyé vers la presse à galets où il est granulé. Le réglage des couteaux à la sortie des filières permet d'obtenir un granulé dont la longueur est proche du diamètre. L'élévation de température provoquée par le passage dans les filières n'est jamais supérieure à 60°C en surface des granulés. La masse volumétrique des granules est de 0,95 kg/litre.

### C/ Conditionnement :

Les granulés sont collectés dans des sacs de 500 kilogrammes et stockés sous hangar pendant quarante huit heures avant conditionnement. Les granulés sont alors conditionnés en sacs plastiques thermosoudés et surconditionnés dans des barils scellés en carton. Dans le baril, on place un gant en matière plastique à utiliser lors de l'épandage.

Pour utiliser les granules selon l'invention, on les répand à la main à la périphérie de la zone à protéger.

La dose répandue varie suivant l'efficacité recherchée et la nature des animaux à écarter, entre 0,5 à 3 kg de granules sur une longueur de 100 mètres.

De préférence, les granules sont également répandus suivant une bande ayant une largeur par exemple comprise entre 1 et 3 mètres.

Les granules pourraient renfermer d'autres agents ou ingrédients répulsifs ou non, tels que des colorants, conservateurs, stabilisants, etc.

Les granules peuvent avoir des formes diverses, telles que cylindrique, sphérique, etc.

Bien entendu, les granules pourraient également être épandus à l'aide d'une machine appropriée. Ils pourraient également être épandus en même temps que des granules de nature différente susceptibles d'exercer un effet distinct vis-à-vis d'animaux de nature différente.

Les agents répulsifs olfactifs peuvent être absorbés par des agents absorbants présentés sous forme de granulats (exemple sépiolite calibrée à 15/30 mm) mousse, pierre ponce...)

## Revendications

1. Produit répulsif à l'égard des animaux et en particulier du gibier, caractérisé en ce qu'il est constitué par des granules en matière absorbante inerte imprégnée, en tant qu'un agent répulsif olfactif, d'huile d'os.

2. Produit répulsif conforme à la revendication 1, caractérisé en ce que la matière absorbante inerte est une substance argileuse.

3. Produit répulsif conforme à la revendication 2, caractérisé en ce que la substance argileuse est choisie parmi la bentonite et la sépiolite.

4. Produit répulsif conforme à la revendication 3, caractérisé en ce qu'il renferme entre 20 et 40% en poids d'huile d'os et 60 à 80% de bentonite.

5. Utilisation du produit répulsif conforme à l'une quelconque des revendications 1 à 4, caractérisée en ce qu'on répand les granules à la périphérie de la zone à protéger, à raison de 0,5 à 3 kg de granules pour une longueur de 100 m.

6. Procédé de fabrication d'un produit répulsif conforme à l'une des revendications 2 à 4, caractérisé par les étapes suivantes :
a) on malaxe à la température ambiante un mélange de substance argileuse et d'huile d'os,
b) on laisse reposer le mélange,
c) on renouvelle plusieurs fois les étapes a) et b) ci-dessus,
d) on met le mélange obtenu sous forme de granules, en évitant que la température de ces granules dépasse 60°C.

## Claims

1. An animal- and more particularly a game-repellent product, characterised in that it is composed of granules made of inert absorbing material, impregnated with bone oil as an olfactory repellent.

2. A repellent product according to claim 1, characterised in that the inert absorbing material is a clayey substance.

3. A repellent product according to claim 2, characterised in that the clayey substance is selected from bentonite and sepiolite.

4. A repellent product according to claim 3, characterised in that it contains from 20 to 40 % by weight of bone oil and 60 to 80 % of bentonite.

5. The use of the repellent product according to any of claims 1 to 4, characterised in that the granules are spread at the periphery of the area to be protected, on the basis of 0.5 to 3 kg of granules for a 100-m length of ground.

6. A method for producing a repellent product according to one of claims 2 to 4, characterised by the following steps :
a) a mixture of clayey substance and bone oil is kneated at room temperature,
b) the mixture is allowed to rest,
c) steps a) and b) above are repeated several times,
d) the resulting mixture is put into granulated form while avoiding that the temperature of the granules exceeds 60°C.

## Patentansprüche

1. Gegenüber Tieren, insbesondere gegenüber Wild wirksames Repellent, dadurch gekennzeichnet, daß es aus Körnchen besteht, die ihrerseits aus einem neutralen absorbierenden, mit Knochnöl - als abstossender Geruchswirkstoff - getränkten Stoff bestehen.

2. Repellent nach Anspruch 1, dadurch gekennzeichnet, daß es sich bei dem neutralen, absorbierenden Stoff um eine tonartige Substanz handelt.

3. Repellent nach Anspruch 2, dadurch gekennzeichnet, daß die tonartige Substanz zwischen den Bentoniten und Sepiolithen ausgewählt wird.

4. Repellent nach Anspruch 3, dadurch gekennzeichnet, daß es gewichtsmäßig zwischen 20 und 40% Knochenöl und zwischen 60 und 80% Bentonit enthält.

5. Verwendung des Repellents nach einem der Ansprüche 1 bis 4, dadurch gekennzeichnet, daß die Körnchen an der Peripherie der zu schützenden Stelle verteilt werden, wobei für Längen von 100 m 0,5 bis 3 kg verwendet werden.

6. Herstellungsverfahren eines Repellents nach einem der Ansprüche 2 bis 4, gekennzeichnet durch folgende Herstellungsschritte :
a) Bei Umgebungstemperatur wird eine Mischung aus tonarti ger Substanz und Knochenfett geknetet,
b) das Gemisch wird dann stehengelassen,
c) die oben genannten Schritte a) und b) werden mehrmals wiederholt,
d) die so erhaltene Mischung wird dann zu Körnchen weiterverarbeitet, wobei diese eine Temperatur von 60°C nicht überschreiten dürfen.
